# EUROPÄISCHE PATENTSCHRIFT

(11) **EP 2 286 961 B1**
(45) Veröffentlichungstag und Bekanntmachung des Hinweises auf die Patenterteilung: **12.10.2016**
(21) Anmeldenummer: 10007712.2
(22) Anmeldetag: 24.07.2010
(51) Int. Cl.: B25B 23/14, B23B 45/00, B25D 16/00, B25F 5/00

(54) **Elektrohandwerkzeuggerät mit Überlastkupplung**
Electric handheld machine tool with overload coupling
Outil manuel électrique doté d'un couplage de surcharge

(30) Priorität: 21.08.2009 DE 102009038419
(43) Veröffentlichungstag der Anmeldung: 23.02.2011
(73) Patentinhaber: Metabowerke GmbH, 72622 Nürtingen (DE)
(72) Erfinder: Spuhler, Edwin, 72622 Nürtingen (DE)
(74) Vertreter: Raunecker, Klaus Peter

(56) Entgegenhaltungen:
- CH-A- 428 363

## Beschreibung

Die Erfindung betrifft ein Elektrohandwerkzeuggerät, insbesondere Bohrmaschine, Schlagbohrmaschine, mit einem Elektromotor und einem schaltbaren Antriebsstrang, umfassend eine Ritzel- oder Zwischenwelle, eine Werkzeugspindel, ein erstes Zahnrad, das eine erste Getriebestufe bildet, und ein zweites Zahnrad, das eine zweite Getriebestufe bildet, und eine Überlastkupplung mit einem axial wirkenden Federmittel, wobei das erste und das zweite Zahnrad und die Überlastkupplung mit dem Federmittel auf der Werkzeugspindel angeordnet sind. Ein derartiges Elektrohandwerkzeuggerät ist bekannt aus DE 25 22 446 A1.

DE 197 07 588 B4 zeigt ein anderes nicht gattungsgemäßes Elektrohandwerkzeuggerät, bei dem die Überlastkupplung auf der Ritzel- oder Zwischenwelle des Antriebsstrangs angeordnet ist, was die typischerweise praktizierte Anordnung bei derartigen Werkzeuggeräten darstellt. Bei DE 197 07 588 B4 sind zwar zwei unterschiedliche Rastenanardnungen mit unterschiedlichem Auslösemoment vorgesehen; die Konstruktion ist jedoch sehr aufwändig und umfasst eine Vielzahl von Teilen, wobei ein Schaltring verschoben werden muss.

Aus der CH 428 363 A ist weiterhin ein Getriebe für Elektrowerkzeuge mit mehreren Zahnrädern bekannt. Mit einem von außen zugänglichen Schaltmechanismus kann die Federlänge der einzelnen Federn und damit die Vorspannung, mit der die beiden Kupplungsteile des Getriebes aneinander gepresst werden, verändert werden. Es lassen sich auf diese Weise Rutschmomente verschiedener Größe einstellen.

Der vorliegenden Erfindung liegt die Aufgabe zugrunde, ein Elektrohandwerkzeuggerät der eingangs genannten Art dahingehend zu verbessern, dass seine Lebensdauer erhöht wird.

Diese Aufgabe wird bei einem Elektrohandwerkzeuggerät der gattungsgemäßen Art erfindungsgemäß dadurch gelöst, dass die Überlastkupplung eine erste und eine zweite Rastenanordnung aufweist und dass die zweite Rastenanordnung ein höheres Lösemoment aufweist als die erste Rastenanordnung, und dass die erste Rastenanordnung zwischen dem ersten Zahnrad und dem zweiten Zahnrad angeordnet ist, indem das erste Zahnrad und das zweite Zahnrad mit ihren einander zugewandten Seiten axial über die erste Rastenanordnung gegeneinander anliegen, und dass die zweite Rastenanordnung zwischen dem ersten Zahnrad und einem axialen mit der Werkzeugspindel drehfesten Anschlag vorgesehen ist, indem das erste Zahnrad auf seiner dem zweiten Zahnrad abgewandten Seite über die zweite Rastenanordnung gegen den axialen Anschlag anliegt. Weiterhin ist erfindungsgemäß vorgesehen, dass die Lösemomente einer ersten und einer zweiten Rastenanordnung der Überlastkupplung unterschiedlich hoch ausgelegt sind. Hierzu sind keilförmige Schrägen der ersten und zweiten Rastenanordnung unterschiedlich geneigt ausgebildet sind, so dass unterschiedliche Lösemomente der Überlastkupplung realisiert sind. Dies eröffnet die Möglichkeit, dass die unterschiedlichen Lösemomente bei der Überlastkupplung in Abhängigkeit von der gerade gewählten Getriebestufe gezielt vorgesehen sind. Beim Antrieb über eine erste Getriebestufe mit kleiner Übersetzung und demgemäß hohem Drehmoment erweist es sich als vorteilhaft, wenn ein hohes Lösemoment bei der Überlastkupplung (also eine "aggressive" Rastenanordnung) vorgesehen wird. Bei Antrieb über eine zweite Getriebestufe mit hoher Drehzahl und geringerem Drehmoment wird das Lösemoment der Rastenkupplung geringer vorgesehen (es wird dann eine "moderate" Rastenanordnung vorgesehen). Die Höhe des Lösemoments kann durch entsprechende Abstimmung der schon eingangs genannten Kupplungsparameter, also der Anzahl der Rastzähne und/oder der Höhe und/oder Steigung und/oder Anlagefläche der Rastzähne vorgegeben und ausgelegt werden.

Dadurch dass die Überlastkupplung auf der Werkzeugspindel, also auf der Abtriebsseite des Antriebsstrangs angeordnet ist, lässt sich den individuell auf die Antriebsspindel ausgeübten Drehmomenten in den verschiedenen Getriebestufen besser Rechnung tragen. Die Überlastkupplung ist dann gewissermaßen in Richtung des Antriebsstrangs der Getriebestufenwahl nachgeordnet, was mit Vorteilen verbunden ist. Die Anordnung der Überlastkupplung auf der Spindelwelle erweist sich als verschleißfester, da sie mit einer Drehzahl von beispielsweise 0 - 1000 oder 0 - 3000 Umdrehungen pro Minute betrieben wird, die gegenüber der Drehzahl der Ritzel- oder Zwischenwelle sehr viel geringer ist. Daher ist die Temperaturentwicklung und der Verschleiß, insbesondere im Auslösefall, geringer.

Nach einer bevorzugten Ausführungsform der Erfindung ist die Überlastkupplung in einem auf der Werkzeugspindel verschieblichen und zwei Getriebestufen bildenden Verschiebeblock angeordnet. Sie ist also erfindungsgemäß in den die Getriebestufe vorgebenden Verschiebeblock integriert.

Dabei erweist es sich als vorteilhaft, wenn der Verschiebeblock eine Verschiebehülse umfasst, die drehfest jedoch axial verschieblich auf der Werkzeugspindel angeordnet ist und die auf einer axialen Seite einen radial nach außen erstreckten Bund aufweist, der einen ersten axialen Anschlag für weitere Komponenten des Verschiebeblocks bildet. Um den Verschiebeblock zur anderen Seite hin mit einem axialen Anschlag auszubilden, erweist es sich als vorteilhaft, wenn der Verschiebeblock eine Spannhülse umfasst, die axial fest auf der Verschiebehülse ist und einen zweiten axialen Anschlag bildet.

Nach einer weiteren bevorzugten Ausführungsform umfasst der Verschiebeblock das Federmittel, das einenends gegen einen axialen Anschlag und anderenends gegen eine weitere Komponente des Verschiebeblocks anliegt. Diese weitere Komponente bildet in bevorzugter Weise sowohl eine Getriebekomponente als auch eine Komponente der Überlastkupplung.

Des weiteren erweist es sich als vorteilhaft, wenn der Verschiebeblock das erste Zahnrad mit Stirnverzahnung und das zweite Zahnrad mit Stirnverzahnung umfasst, die gegenüber der Verschiebehülse axial verschieblich sind. Dies eröffnet die Möglichkeit, die Zahnräder selbst als Komponenten der Überlastkupplung zu nutzen.

Dies geschieht in bevorzugter Weise dadurch, dass das erste Zahnrad und das zweite Zahnrad mit ihren einander zugewandten Seiten axial über eine erste Rastenanordnung gegeneinander anliegen. Weiter erweist es sich als vorteilhaft, wenn das erste Zahnrad auf seiner dem zweiten Zahnrad abgewandten Seite über eine zweite Rastenanordnung gegen einen axialen Anschlag anliegt. Dieser axiale Anschlag kann in vorteilhafter Weise durch den nach radial außen erstreckten Bund der Verschiebehülse gebildet sein.

In Weiterbildung dieses Erfindungsgedankens erweist es sich als vorteilhaft, dass das erste Zahnrad eine erste Getriebestufe und das zweite Zahnrad eine zweite Getriebestufe bildet und dass die zweite Rastenanordnung zwischen dem ersten Zahnrad und dem axialen Anschlag ein höheres Lösemoment aufweist als die erste Rastenanordnung zwischen dem ersten und dem zweiten Zahnrad.

In besonders bevorzugter Weise ist ein erstes und/oder zweites Zahnrad der Schaltgetriebeanordnung ein Sinterteil und bei dem Zahnrad vorgesehene Rasten sind einstückig mit dem Sinterteil ausgebildet.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine eher schematische Darstellung eines Antriebsstrangs umfassend eine Ritzel- oder Zwischenwelle und eine Werkzeugspindel mit Verschiebeblock und Spannfutter;
- Figur 2: eine schematische Schnittansicht durch die Werkzeugspindel mit Spannfutter und Verschiebeblock gemäß Figur 1.

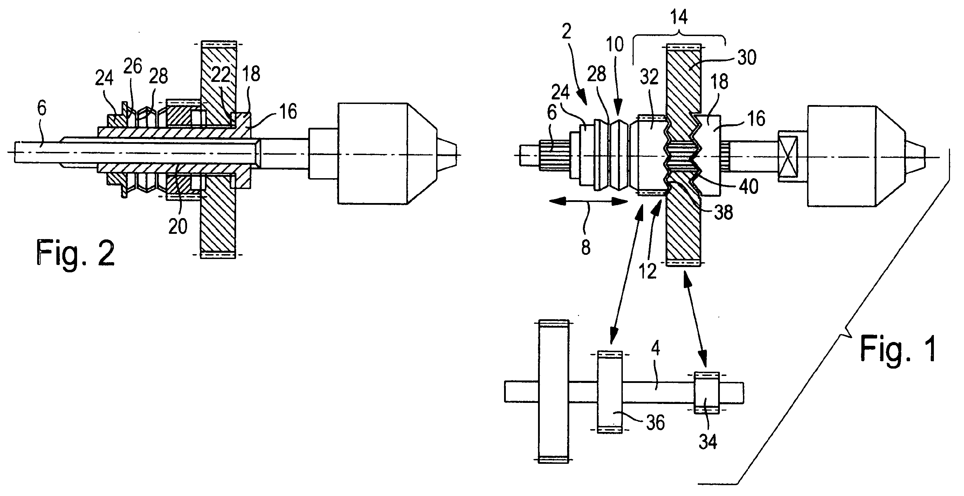

Figur 1 zeigt schematisch einen insgesamt mit dem Bezugszeichen 2 bezeichneten Antriebsstrang eines nicht dargestellten Elektrohandwerkzeuggeräts, etwa in Form einer Bohrmaschine oder Schlagbohrmaschine. Der Antriebsstrang 2 umfasst eine von einem nicht dargestellten Elektromotor angetriebene Ritzel- oder Zwischenwelle 4 und eine Werkzeugspindel 6, auf der drehfest jedoch in Längsrichtung 8 der Werkzeugspindel 6 verstellbar ein insgesamt mit dem Bezugszeichen 10 bezeichneter Verschiebeblock sitzt. Dieser Verschiebeblock 10 umfasst in noch näher zu beschreibender Ausbildung eine Überlastkupplung 12 und einen Teil einer Schaltgetriebeanordnung 14, deren komplementärer anderer Teil auf der Ritzel- oder Zwischenwelle 4 vorgesehen ist.

Die Basis des Verschiebeblocks 10 bildet eine Verschiebehülse 16, die einenends einen nach radial außen vorstehenden Bund 18 aufweist und beispielhaft über eine Innenverzahnung oder eine innere Längsnutenanordnung 20 zwar drehfest mit der Werkzeugspindel 6, jedoch in Längsrichtung 8 der Werkzeugspindel 6 verschieblich angeordnet ist. Der Bund 18 bildet einen ersten axialen Anschlag 22 für weitere noch zu beschreibende Komponenten. Auf der anderen Seite der Verschiebehülse 16 ist axial fest eine Spannhülse 24 vorgesehen, die einen weiteren axialen Anschlag 26 bildet. Dieser weitere axiale Anschlag 26 könnte aber auch in anderer Weise als durch die Spannhülse 24 realisiert sein. Gegen diesen weiteren axialen Anschlag 26 ist ein Federmittel 28 einenends axial abgestützt. Anderenends liegt das Federmittel 28 gegen eines von zwei Zahnrädern 30, 32 unter axialer Druckspannung an. Das erste Zahnrad 30 bildet ein erstes Getrieberad mit Stirnverzahnung und das zweite Zahnrad 32 bildet ein zweites Getrieberad mit Stirnverzahnung und ist kleiner als das erste Getrieberad 30, es bildet also die zweite Getriebestufe mit höherer Übersetzung. In Figur 1 sind die korrespondierenden antriebsseitigen Zahnräder 34, 36 auf der Ritzel- oder Zwischenwelle 4 dargestellt. Durch Längsverschiebung des Verschiebeblocks 10 durch an sich bekannte und in der Figur nicht dargestellte Mittel in Längsrichtung 8 gelangt die erste oder zweite Getriebestufe in Antriebsverbindung.

Zumindest grundsätzlich wäre es aber denkbar, dass ein die Zahnräder 30, 32 haltender Block als Ganzes in Längsrichtung 8 unverschieblich gegenüber der Werkzeugspindel 6 vorgesehen ist und stattdessen die Ritzelwelle oder die dort vorgesehenen Zahnräder 34, 36 zur Umschaltung der Schaltgetriebeanordnung 14 in der Längsrichtung 8 hin und her stellbar sind.

Das erste und zweite Zahnrad 30 und 32 und der Bund 18 der Verschiebehülse 16 bilden zugleich die Überlastkupplung 12, indem das erste Zahnrad 30 und das zweite Zahnrad 32 mit ihren einander zugewandten Seiten über eine erste Rastenanordnung 38 unter Federvorspannung gegeneinander anliegen. Das erste Zahnrad 30 liegt gegen den Bund 18 der Verschiebehülse 16 über eine zweite Rastenanordnung 40 ebenfalls unter Federvorspannung an. Die erste und die zweite Rastenanordnung 38, 40 ist in den Figuren lediglich schematisch angedeutet. Sie lassen sich hinsichtlich der Ausbildung der Kupplungsparameter in verschiedener Weise gestalten. In den Figuren ist lediglich angedeutet, dass die zweite Rastenanordnung 40 ein höheres Lösemoment aufweist, als die erste Rastenanordnung 38. Dies ist beispielhaft durch eine größere Steigung der angedeuteten Schrägen der zweiten Rastenanordnung 40 gegenüber der Schrägen der ersten Rastenanordnung 38 angedeutet. Die zweite Rastenanordnung 40 ist aktivierbar, wenn das erste Zahnrad in Antriebsverbindung mit dem Zahnrad 34 der Ritzel- oder Zwischenwelle 4 steht. Dies stellt die erste Getriebestufe mit verhältnismäßig geringer Drehzahl und hohem Drehmoment dar. Infolgedessen ist die zweite Rastenanordnung 40 mit einem höheren Drehmoment als die erste Rastenanordnung 38 ausgelegt. Die erste Rastenanordnung 38 ist aktivierbar, wenn das zweite kleinere Zahnrad 32 der Werkzeugspindel 6 mit dem größeren Zahnrad 36 der Ritzel- oder Zwischenwelle 4 in Antriebsverbindung steht, also mit der zweiten höheren Getriebestufe mit höherer Drehzahl und geringerem Drehmoment, angetrieben wird. Daher ist das Auslösemoment der ersten Rastenanordnung 38 auch geringer ausgelegt.

Insgesamt wird die Überlastkupplung 12 mit moderaten Drehzahlen von beispielsweise bis zu 1000 Umdrehungen pro Minute in der ersten Getriebestufe und bis 3000 Umdrehungen pro Minute in der zweiten Getriebestufe betrieben und somit mit wesentlich geringeren Drehzahlen als die Ritzel- und Zwischenwelle 4. Die Temperaturentwicklung innerhalb der Überlastkupplung 12 ist deutlich geringer als bei Anordnung der Überlastkupplung 12 auf der Ritzel- oder Zwischenwelle 4. Außerdem kann die Überlastkupplung 12 in Abhängigkeit der Getriebestufe individuell ausgelegt werden. Hierdurch wird insgesamt ein geringerer Verschleiß und eine längere Lebensdauer im Bereich der Überlastkupplung 12 realisiert.

## Patentansprüche

1. Elektrohandwerkzeuggerät, insbesondere Bohrmaschine, Schlagbohrmaschine, mit einem Elektromotor und einem schaltbaren Antriebsstrang (2), umfassend eine Ritzel- oder Zwischenwelle (4), eine Werkzeugspindel (6), ein erstes Zahnrad (30), das eine erste Getriebestufe bildet, und ein zweites Zahnrad (32), das eine zweite Getriebestufe bildet, und eine Überlastkupplung (12) mit einem axial wirkenden Federmittel (28), wobei das erste und das zweite Zahnrad (30, 32) und die Überlastkupplung (12) mit dem Federmittel (28) auf der Werkzeugspindel (6) angeordnet sind, wobei die Überlastkupplung (12) eine erste und eine zweite Rastenanordnung (38, 40) aufweist und die zweite Rastenanordnung (40) ein höheres Lösemoment aufweist als die erste Rastenanordnung (38), wobei die erste Rastenanordnung (38) zwischen dem ersten Zahnrad (30) und dem zweiten Zahnrad (32) angeordnet ist, indem das erste Zahnrad (30) und das zweite Zahnrad (32) mit ihren einander zugewandten Seiten axial über die erste Rastenanordnung (38) gegeneinander anliegen, und wobei die zweite Rastenanordnung (40) zwischen dem ersten Zahnrad (30) und einem axialen mit der Werkzeugspindel drehfesten Anschlag (22) vorgesehen ist, indem das erste Zahnrad (30) auf seiner dem zweiten Zahnrad (32) abgewandten Seite über die zweite Rastenanordnung (40) gegen den axialen Anschlag (22) anliegt, **dadurch gekennzeichnet, dass** keilförmige Schrägen der ersten und zweiten Rastenanordnung (38, 40) unterschiedlich geneigt ausgebildet sind, so dass unterschiedliche Lösemomente der Überlastkupplung realisiert sind.

2. Elektrohandwerkzeuggerät nach Anspruch 1, **dadurch gekennzeichnet, dass** die Überlastkupplung (12) in einem auf der Werkzeugspindel (6) verschieblichen und zwei Getriebestufen bildenden Verschiebeblock (10) angeordnet ist.

3. Elektrohandwerkzeuggerät nach Anspruch 2, **dadurch gekennzeichnet, dass** der Verschiebeblock (10) eine Verschiebehülse (16) umfasst, die drehfest jedoch axial verschieblich auf der Werkzeugspindel (6) angeordnet ist und die auf einer axialen Seite einen radial nach außen erstreckten Bund (18) aufweist, der den ersten axialen Anschlag (22) bildet.

4. Elektrohandwerkzeuggerät nach Anspruch 2 oder 3, **dadurch gekennzeichnet, dass** der Verschiebeblock (10) eine Spannhülse (24) umfasst, die axial fest auf der Verschiebehülse (16) ist und einen zweiten axialen Anschlag (26) bildet.

5. Elektrohandwerkzeuggerät nach Anspruch 2, 3 oder 4, **dadurch gekennzeichnet, dass** der Verschiebeblock (10) das Federmittel (28) umfasst, das einenends gegen einen axialen Anschlag (26) und anderenends gegen eine weitere Komponente des Verschiebeblocks (10) anliegt.

6. Elektrohandwerkzeuggerät nach Anspruch 5, **dadurch gekennzeichnet, dass** die weitere Komponente sowohl eine Getriebekomponente als auch eine Komponente der Überlastkupplung bildet.

7. Elektrohandwerkzeuggerät nach einem der Ansprüche 2-6, dadurch gekenntzeichnet, dass der Verschiebeblock (10) das erste Zahnrad (30) mit Stirnverzahnung und das zweite Zahnrad (32) mit Stirnverzahnung umfasst, die gegenüber der Verschiebehülse (16) axial verschieblich sind.

8. Elektrohandwerkzeuggerät nach einem der Ansprüche 2-7, **dadurch gekennzeichnet, dass** der axiale Anschlag (22) von der Verschiebehülse (16) selbst gebildet ist.

9. Elektrohandwerkzeuggerät nach einem oder mehreren der vorstehenden Ansprüche, **dadurch gekennzeichnet, dass** das erste und/oder das zweite Zahnrad (30, 32) der Schaltgetriebeanordnung ein Sinterteil ist und dass bei dem Zahnrad vorgesehene Rasten einstückig mit dem Sinterteil ausgebildet sind.

## Claims

1. Electric hand held machine tool, in particular drill or percussion drill, with an electric motor and a switchable drive train (2), comprising a pinion shaft or intermediate shaft (4), a tool spindle (6), a first gearwheel (30) which forms a first gearing stage, and a second gearwheel (32) which forms a second gearing stage, and an overload coupling (12) with an axially acting spring means (28), wherein the first and the second gearwheel (30, 32) and the overload coupling (12) with the spring means (28) are arranged on the tool spindle (6), wherein the overload coupling (12) has a first and a second latch arrangement (38, 40), and the second latch arrangement (40) has a higher release torque than the first latch arrangement (38), wherein the first latch arrangement (38) is arranged between the first gearwheel (30) and the second gearwheel (32) by the first gearwheel (30) and the second gearwheel (32) lying with their mutually facing sides against each other axially via the first latch arrangement (38), and wherein the second latch arrangement (40) is provided between the first gearwheel (30) and an axial stop (22), which is fixed non rotatably to the tool spindle, by the first gearwheel (30) lying on its side facing away from the second gearwheel (32) against the axial stop (22) via the second latch arrangement (40), **characterized in that** wedge-shaped bevels of the first and second latch arrangement (38, 40) are designed with different inclinations, and therefore different release torques of the overload coupling are realized.

2. Electric hand held machine tool according to Claim 1, **characterized in that** the overload coupling (12) is arranged in a displacement block (10) which is displaceable on the tool spindle (6) and forms two gearing stages.

3. Electric hand held machine tool according to Claim 2, **characterized in that** the displacement block (10) comprises a displacement sleeve (16) which is arranged non-rotatably but axially displaceably on the tool spindle (6) and which has, on an axial side, a radially outwardly extending collar (18) which forms the first axial stop (22).

4. Electric hand held machine tool according to Claim 2 or 3, **characterized in that** the displacement block (10) comprises a clamping sleeve (24) which is axially fixed on the displacement sleeve (16) and forms a second axial stop (26).

5. Electric hand held machine tool according to Claim 2, 3 or 4, **characterized in that** the displacement block (10) comprises the spring means (28) which lies at one end against an axial stop (26) and at the other end against a further component of the displacement block (10).

6. Electric hand held machine tool according to Claim 5, **characterized in that** the further component forms both a gearing component and a component of the overload coupling.

7. Electric hand held machine tool according to one of Claims 2-6, **characterized in that** the displacement block (10) comprises the first gearwheel (30) with a serration and the second gearwheel (32) with a serration, which gearwheels are axially displaceable in relation to the displacement sleeve (16).

8. Electric hand held machine tool according to one of Claims 2-7, **characterized in that** the axial stop (22) is formed by the displacement sleeve (16) itself.

9. Electric hand held machine tool according to one or more of the preceding claims, **characterized in that** the first and/or the second gearwheel (30, 32) of the switching gearing arrangement is a sintered part, and **in that** latches provided in the case of the gearwheel are formed integrally with the sintered part.

## Revendications

1. Appareil électroportatif, notamment perceuse, perceuse-frappeuse, comportant un moteur électrique et un bloc d'entraînement commutable (2), comprenant un pignon ou roue intermédiaire (4), une broche porte-outil (6), une première roue dentée (30), qui forme un premier niveau de engrenage, et une deuxième roue dentée (32), qui forme un deuxième niveau de engrenage et un débrayage de surcharge (12) avec des moyens ressorts axiaux (28), dans lequel la première et la deuxième roues dentées (30, 32) et le débrayage de surcharge (12) avec les moyens ressorts axiaux (28), sont montés sur la broche porte-outil (6), dans lequel le débrayage de surcharge (12) comporte un premier et un second mécanismes à cliquets (38, 40), et le second mécanisme à cliquet (40) possède un moment de libération plus élevé que le premier mécanisme à cliquet (38), dans lequel le premier mécanisme à cliquet (38) est monté entre la première roue dentée (30) et la deuxième roue dentée (32), en ce que la première roue dentée (30) et la deuxième roue dentée (32) sont en appui l'une contre l'autre, avec leur côté axialement en regard, par l'intermédiaire du premier mécanisme à cliquet (38) et dans lequel, le deuxième mécanisme à cliquet (40) est prévu entre la première roue dentée (30) et avec une butée axiale, fixe en rotation (22) par rapport à la broche porte-outil, de sorte que la première roue dentée (30) est en appui contre la butée axiale (22) par son côté opposé à la deuxième roue dentée (40), **caractérisé en ce que** des éléments coniques obliques du premier et du deuxième mécanisme à cliquet (38, 40) sont formés avec des inclinaisons différentes, de sorte que des moments de libération différents sont réalisés pour les débrayages de surcharge.

2. Appareil électroportatif selon la revendication 1, **caractérisé en ce que** le débrayage de surcharge (12) est disposé dans un bloc coulissant (10), monté sur la broche porte-outil (6) et définissant par coulissement les deux niveaux de fonctionnement.

3. Appareil électroportatif selon la revendication 2, **caractérisé en ce que** le bloc coulissant (10) comporte un manchon coulissant (16) qui est monté fixe en rotation, mobile toutefois en translation axiale, sur la broche porte-outil (6) et qui présente, sur un côté axial, un collier radial (18), qui forme la première butée axiale (22).

4. Appareil électroportatif selon les revendications 2 ou 3, **caractérisé en ce que** le bloc coulissant (10) comporte une douille de tension (24) qui est solidaire axialement du manchon coulissant (16), et qui constitue une deuxième butée axiale (26).

5. Appareil électroportatif selon les revendications 2, 3 ou 4, **caractérisé en ce que** le bloc coulissant (10) comporte les moyens ressorts (28), qui sont d'une part en appui contre une butée axiale (26) et d'autre part contre un composant supplémentaire du bloc coulissant (10).

6. Appareil électroportatif selon la revendication 5, **caractérisé en ce que** le composant supplémentaire peut aussi bien être un composant de l'entraînement qu'un composant du débrayage de surcharge.

7. Appareil électroportatif selon l'une des revendications 2 - 6, **caractérisé en ce que** le bloc coulissant (10) comporte la première roue dentée (30) avec denture frontale et la deuxième roue dentée (32) avec denture frontale, qui sont mobiles en translation axiale par rapport au manchon coulissant (16).

8. Appareil électroportatif selon l'une des revendications 2 - 7, **caractérisé en ce que** la butée axiale (22) est directement formée par le manchon coulissant (16).

9. Appareil électroportatif selon une ou plusieurs des revendications précédentes, **caractérisé en ce que** la première et/ou la deuxième roue dentée (30, 32) de l'entraînement commutable, comporte une pièce en un matériau fritté et **en ce que** les dentures de la roue dentée sont réalisées ensemble avec la pièce en matériau fritté.
